# EUROPÄISCHE PATENTSCHRIFT

(11) **EP 2 730 496 B1**
(45) Veröffentlichungstag und Bekanntmachung des Hinweises auf die Patenterteilung: **12.06.2019**
(21) Anmeldenummer: 13192074.6
(22) Anmeldetag: 08.11.2013
(51) Int. Cl.: B64C 1/12, B64C 1/06, B64C 1/00

(54) **Flächenbauteil für ein Luftfahrzeug und Herstellungsverfahren hierfür**
Panel for aircraftand method of producing the same
Composant plat pour aéronef et procédé de sa fabrication

(30) Priorität: 12.11.2012 DE 102012110862
(43) Veröffentlichungstag der Anmeldung: 14.05.2014
(73) Patentinhaber: Airbus Defence and Space GmbH, 85521 Ottobrunn (DE)
(72) Erfinder: Weber, Markus J., 21129 Hamburg (DE); Wieltsch, Andreas, 20459 Hamburg (DE)
(74) Vertreter: Kastel, Stefan

(56) Entgegenhaltungen:
- WO-A1-2008/139214
- DE-A1-102009 031 227
- DE-A1-102009 057 018
- US-A1- 2008 023 582
- US-A1- 2009 224 102
- US-A1- 2011 236 622

## Beschreibung

Die Erfindung betrifft ein Flächenbauteil für ein Luftfahrzeug, welches Flächenbauteil wenigstens eine Schale und eine Versteifungsgitterstruktur aufweist. Weiter betrifft die Erfindung ein Herstellverfahren für ein solches Flächenbauteil. Derartige Flächenbauteile dienen beispielsweise zum Aufbau einer Rumpfstruktur eines Luftfahrzeuges, wie beispielsweise eines Flugzeuges oder eines Hubschraubers oder eines Raumfahrzeuges oder dergleichen. Derartige Flächenbauteile können aber auch in anderen Bereichen von Luftfahrzeugen, wie beispielsweise Tragflächen oder Leitwerken, Druckschotts oder in Zwischenböden Verwendung finden. Auch können solche Flächenbauteile in anderen Anwendungsgebieten, wo es auf Leichtbau ankommt, wie beispielsweise im Fahrzeugbau, im Schiffbau oder auch im Bauwesen, eingesetzt werden.

Für Luftfahrzeuge konzipierte Flächenbauteile, die aus einer Versteifungsgitterstruktur und wenigstens einer Schale aufgebaut sind, sind beispielsweise aus der DE 10 2009 013 511 A1, der DE 10 2009 013 585 A1, der DE 10 2009 048 748 A1, der DE 10 2009 056 994 A1, der DE 10 2009 056 995 A1, der DE 10 2009 056 996 A1, der DE 10 2009 056 997 A1, der DE 10 2009 056 998 A1, der DE 10 2009 056 999 A1, der DE 10 2009 057 006 A1, der DE 10 2009 057 009 A1, der DE 10 2009 057 010 A1 sowie der DE 10 2009 057 018 A1 bekannt.

US 2011 / 0 236 622 A1 offenbart eine Faserverbundkomponente zum Absorbieren von Energie für ein Luftfahrzeug. Die Faserverbundkomponente enthält einen Metallfolienabschnitt.

WO 2008 / 139 214 A1 offenbart ein verstärktes Panel mit Spannungsaktuatoren zum anlegen einer mechanischen Spannung an das Panel, um Schnittstellenspannungen zwischen Stringern und der Haut zu verringern. Die Spannungsaktuatoren werden erst bei überschreiten einer Schwelle aktiviert. Das Dokument zeigt den Oberbegriff der unabhängigen Ansprüche 1, 3, 9 und 11.

Die bekannten Flächenbauteile kommen überwiegend als Rumpfbauteile für Flugzeuge in Betracht.

Flugzeugrumpfzellen für große Flugzeuge werden bei derzeit auf dem Markt erhältlichen Flugzeugen überwiegend mit monolithischen Hautfeldern gebildet. Zur Aussteifung sind innenseitig eine Vielzahl von parallel zur Flugrichtung zueinander beabstandet verlaufenden Längssteifen auf den monolithischen Hautfeldern vorgesehen. Darüber hinaus ist eine Vielzahl von Ringspanten innenseitig auf den Hautfeldern angeordnet, die jeweils quer zur Flugrichtung ausgerichtet sind. Die derart verstärkten monolithischen Hautfelder werden im Wege der Mehrschalenbauweise zu tonnenartigen Rumpfsektionen komplettiert und anschließend durch ein hintereinander Anreihen zu einer vollständigen Flugzeugrumpfzelle gefügt.

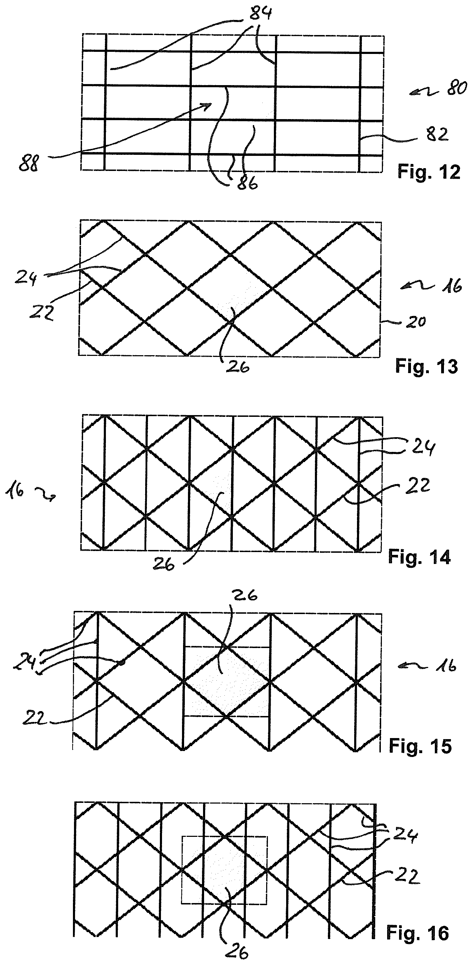

Eine derartige Versteifungsstruktur mit in Längsrichtung und in Umfangsrichtung des Rumpfes verlaufenden Versteifungen wird auch als Spant- Stringer-Bauweise bezeichnet. Ein Beispiel für eine bekannte Gitterstruktur solcher Spant- Stringer-Bauweisen ist in Fig. 12 wiedergegeben. Zwischen den Versteifungsgitterstrukturen sind demnach rechteckige Hautfelder ausgebildet.

Bei den bisher auf dem Markt erhältlichen Flugzeugtypen sind sowohl die Schalen als auch die Versteifungsgitterstrukturen überwiegend aus Metallen gefertigt. Erst in jüngerer Zeit geht man dazu über, sowohl für die Schalen als auch für die Versteifungsstrukturen Faserverbundwerkstoffe einzusetzen.

Beispiele für den Einsatz solcher Faserverbundstrukturen sowie Herstellverfahren und vorteilhafte Gitterstrukturen für die Versteifungsstrukturen sind in den vorerwähnten Druckschriften beschrieben.

Leichtbaustrukturen werden unter Druckbelastung bzw. Schubbelastung auf Stabilität ausgelegt. Das sogenannte Beulen führt hierbei ab einer bestimmten Last zu einer schlagartigen Verformung außerhalb der Ebene einer versteiften Platte oder Schale. Dieser dynamische Effekt kann zu Ermüdungserscheinigungen führen oder kann bei Anwendung von Profilen auf der Haut zu hohen Schälspannungen und lokalen Biegemomenten führen.

Die auch heute noch im Flugzeugbau verwendeten metallischen Strukturen können derart ausgelegt werden, dass der Nachbeulbereich zur Ausnutzung der Druck- und Schubbelastung miteinbezogen wird. Die metallischen Platten und Schalen werden bei einer Schubbelastung auf den etwa zylinderförmig geformten Rumpf zunächst geringfügig nach außen gebeult und schlagen dann ab einer bestimmten Last nach innen zu den Versteifungsstrukturen hin um. Die entsprechenden dynamischen Aufnahmekräfte auch im Nachbeulbereich können zur Stabilitätsberechnung in die Konstruktion miteingebunden werden.

Aufgrund eines möglichen Materialversagens bei einer schlagartigen Verformung von Faserverbundbauteilen werden Flächenbauteile mit Schalen und Versteifungsgitterstrukturen bei einer Ausführung in Faserverbundbauweise nicht im sogenannten Nachbeulbereich beschrieben. Ursächliches Materialversagen können hierbei Brüche in Faser und Kunststoffmatrix des Laminats und Delaminationen im Laminat, sowie zwischen der Schale und den Versteifungsprofilen sein.

Für die folgenden Überlegungen geht man als Grundlage von einer Spant-Stringer-Bauweise für Flugzeugprimärstrukturen, wie Rumpf oder Tragflächen, aus, wie sie in der beigefügten Fig. 12 angedeutet ist. Verwendet man metallische Werkstoffe, tritt zwar grundsätzlich Ermüdung auf. Gleichzeitig wird ein Flugzeug oft mit geringen Lastamplituden in vielen Richtungen, selten jedoch mit hohen Lastamplituden belastet. Entsprechend muss die Ermüdung bei den oft auftretenden geringeren Lasten stärker berücksichtigt werden als bei seltenen hohen Belastungen. Das hat zur Folge, dass die statische Auslegung aufgrund Ermüdung deutlich geringere Spannungen erlaubt als für den Fall des Stabilitätsversagens. Folglich können metallische Strukturen auf Stabilität unterhalb der Grenzlast - Limit Load (LL) - ausgelegt werden. Der Nachbeulbereich kann sinnvoll mit einbezogen werden.

Bei Faserverbundmaterialien tritt keine langsame Ermüdung auf; derartige Faserverbundmaterialien können vielmehr bei unzulässig auftretenden Überbelastungen schlagartig versagen. Bei Faserverbundmaterialien gibt es die bei metallischen Werkstoffen auftretende Absenkung der statischen Festigkeiten aufgrund der Ermüdung nicht. Entsprechend kann eine gleiche Struktur nicht in gleichem Maße den Nachbeulbereich ausnutzen, sofern sie in Faserverbund gebaut wird. Schlußendlich ist diese Bauweise dadurch benachteiligt und verliert einen signifikanten Teil ihrer Vorteile.

Aufgabe der Erfindung ist es, ein Flächenbauteil für ein Luftfahrzeug sowie ein Herstellungsverfahren hierfür derart zu verbessern, dass ein Flächenbauteil bei universal möglicher Materialauswahl und auch möglichem Faserverbundmaterial für die Schale mit signifikant erhöhten, ertragbaren Lasten betrieben werden kann oder bei gleicher Tragkraft mit deutlich reduzierter Masse hergestellt werden kann. Diese Aufgabe wird durch den jeweiligen Gegenstand der unabhängigen Ansprüche 1, 3, 9 und 11 gelöst.

Vorteilhafte Ausgestaltungen der Erfindung sind Gegenstand der abhängigen Ansprüche.

Gemäß einem ersten Aspekt schafft die Erfindung ein Flächenbauteil für ein Luftfahrzeug, mit wenigstens einer Schale und einer Versteifungsgitterstruktur, dadurch gekennzeichnet, dass die Schale eine durch Ausbilden der Schale bei der Fertigung mit wenigstens einer Auslenkung oder einer Anordnung von Auslenkungen der Schale zu einer Richtung hin gebildete Vorbeulungsstruktur hat, die unter einer in Richtung parallel zur Schale auf die Schale wirkenden Belastung eine Verbeulung der Schale in einer vorbestimmten Richtung bewirkt.

Es ist bevorzugt, dass wenigstens die Schale aus Faserverbundmaterial gebildet ist.

Gemäß einem weiteren Aspekt schafft die Erfindung ein Flächenbauteil für ein Luftfahrzeug, mit wenigstens einer Schale und einer Versteifungsgitterstruktur, wobei die Schale aus Faserverbundmaterial gebildet ist, wobei die Schale eine Vorbeulungsstruktur hat, die unter einer in Richtung parallel zur Schale auf die Schale wirkenden Belastung eine Verbeulung der Schale in einer vorbestimmten Richtung dadurch bewirkt, dass das Faserverbundmaterial bezüglich einer Mittelfläche der Schale unsymmetrisch aufgebaut ist.

Es ist bevorzugt, dass das Faserverbundmaterial bezüglich einer Mittelfläche der Schale unsymmetrisch aufgebaut ist, um die Verbeulung unter Last zu positiv zu unterstützen oder vollständig auszulösen.

Es ist bevorzugt, dass die Schale eine Anordnung von Auslenkungsbereichen hat, in denen die Schale zu einer Querrichtung hin ausgelenkt ist.

Es ist bevorzugt, dass die Versteifungsgitterstruktur auf einer Seite der Schale angeordnet ist und dass die Vorbeulungsstruktur derart ausgebildet ist, dass sich die Schale unter Belastung zuerst zu der Versteifungsgitterstruktur in einen Bereich zwischen Versteifungsprofilen hinein verbeult.

Es ist bevorzugt, dass die Versteifungsgitterstruktur derart ausgebildet ist, dass sich die Schale in durch die Versteifungsgitterstruktur jeweils umrahmten Hautfeldern unter Belastung im Wesentlichen nur mit einer Beulhalbwelle ausbeult.

Es ist bevorzugt, dass die Hautfelder dreieckig und/oder sechseckig und/oder im Wesentlichen quadratisch ausgebildet sind.

Gemäß eines weiteren Aspekts schafft die Erfindung eine Primärstruktur oder Rumpf- und/oder Tragflächensektion, insbesondere für ein Luftfahrzeug, welche Sektion zumindest teilweise aus oder mit wenigstens einem oder mehreren derartiger Flächenbauteile gebildet ist.

Gemäß einem weiteren Aspekt schafft die Erfindung ein Verfahren zum Herstellen eines Flächenbauteils für ein Luftfahrzeug, mit
a) Herstellen einer Schale und
b) Herstellen einer Versteifungsstruktur zum Versteifen der Schale,
wobei Schritt a) den Schritt umfasst:
a1) Ausbilden der Schale mit einer Vorbeulungsstruktur derart, dass sich die Schale unter einer in Richtung der Schalebene wirkenden Last in eine vorbestimmte Richtung ausbeult durch Ausbilden der Schale bei der Fertigung mit wenigstens einer Auslenkung oder einer Anordnung von Auslenkungen der Schale zu einer Richtung hin, um so die Vorbeulstruktur zu bilden oder durch unsymmetrisches Anordnen von Faserstrukturen, um eine Schalhälfte steifer als die andere Schalhälfte auszubilden und so die Vorbeulungsstruktur positiv zu unterstützen oder auszulösen.

Es ist bevorzugt, dass der Schritt a) umfasst:
Herstellen der Schale in Faserverbundbauweise.

Gemäß einem weiteren Aspekt schafft die Erfindung ein Verfahren zum Herstellen eines Flächenbauteils für ein Luftfahrzeug, mit
a) Herstellen einer Schale in Faserverbundbauweise und
b) Herstellen einer Versteifungsstruktur zum Versteifen der Schale,
wobei Schritt a) den Schritt umfasst:
a1) Ausbilden der Schale mit einer Vorbeulungsstruktur derart, dass sich die Schale unter einer in Richtung der Schalebene wirkenden Last in eine vorbestimmte Richtung ausbeult durch unsymmetrisches Anordnen von Faserstrukturen, um eine Schalhälfte steifer als die andere Schalhälfte auszubilden und so die Vorbeulungsstruktur zu bilden.

Eine Grundidee der Erfindung liegt darin, den Nachbeulbereich bei beliebiger Materialwahl und insbesondere auch für Flächenbauteile in Faserverbundbauweise einzusetzen, um hierdurch signifikant die ertragbaren Lasten zu erhöhen und damit zu deutlich reduzierten Massen bei gleicher Tragkraft zu gelangen.

Bei dem erfindungsgemäßen Flächenbauteil wird im Vergleich zu einer "perfekten Struktur", wo die Schale glatt und über die gesamte Ausdehnung mit einer vorgegebenen Krümmung oder entsprechend eben ausgebildet und mit monolithischen Eigenschaften versehen ist, mit einer gezielten Vorbeulstruktur versehen, die wenigstens bei Belastung der Struktur eine Vorbeulung bzw. eine vorbestimmte Ausbeulung der Schale bewirken.

Beispielsweise werden bei der Schale bereits bei der Fertigung Imperfektionen geringerer Amplitude in der zur gewünschten Einflussnahme auf das Beulen geeigneten Form eingebracht. Zum Beispiel kann die Schale bereits bei der Fertigung so ausgebildet sein, dass sie sich bereits in geringem Maße in unbelastetem Zustand beult. Dadurch ist eine weitere Beulung bei Belastung in der gleichen Richtung vorgegeben.

Alternativ kann eine gewünschte Beulung unter Last durch einen gezielt ausgewählten unsymmetrischen Materialaufbau, z.B. gezielt ausgewählten unsymmetrischen Aufbau von Faserverbundschichten, erreicht werden. Zum Beispiel kann durch einen unsymmetrischen Aufbau von Faserverbundschichten eine Koppelung der Biegung und Membraneigenschaften erreicht werden. Hierdurch könnte mit steigender Last eine Vorbeulung durch Biegung provoziert werden, die wiederum den entsprechenden Effekt der oben erwähnten Imperfektionen erfüllt.

Ein Flächenbauelement mit Schale und Versteifungsgitterstrukturen kann zum Beispiel bei einer mit Imperfektionen versehenen Schale ein Aussehen wie die Außenhaut eines Golfballes mit Einbeulungen haben.

Durch die gezielte Vorbeulung bzw. einen Aufbau einer Schale derart, dass sie sich bei Belastung auf das Flächenbauteil mit einer Last in der Flächenebene des Flächenbauteiles in einer gewünschten Weise verformt, kann die Schale so ausgelegt werden, dass sie sich zum Beispiel gleich nach innen zu der Gitterstruktur hin verformt.

Ein plötzliches Umschlagen der Ausbeulung von einer Richtung auf die andere wird dadurch vermieden. Hierdurch werden schlagartige Belastungen auf die Schale vermieden.

Dies hat besondere Vorteile bei Aufbau der Schale in Faserverbundbauweise. Jedoch ist die Erfindung nicht auf den Aufbau der Schale in Faserverbundbauweise beschränkt; vielmehr kann die gezielte Konstruktion mit Vorbeulungsstrukturen auch Vorteile bei Ausbildung in anderen Materialien haben.

Besonders bevorzugt sind die Versteifungsgitterstrukturen derart regelmäßig vorgesehen, dass die zwischen den Versteifungsstrukturstäben definierten Hautfelder unter Last eine vorbestimmte Beulform aufweisen. Eine Beulform ist am besten vorhersagbar, wenn das Hautfeld geometrisch derart definiert ist, dass es sich im Wesentlichen nur mit einer Beulhalbwelle zu einer Richtung hin ausbeult. Mit anderen Worten sind im Schnitt durch eine unter Last verbeulte Schale nur ein Hauptmaximum und möglichst keine Wendepunkte in der Beulung ersichtlich. "Im Wesentlichen" bedeutet hier, dass kleinere in der Praxis vorkommende Abweichungen von der perfekten Beulhalbwelle, wie z.B. das Auftreten einer zweiten Beulung mit deutlich geringerer Amplitude wie die Hauptbeulung, unschädlich sind.

Eine solche vorhersagbare Beulstruktur mit im Wesentlichen nur einer Beulhalbwelle lässt sich bei der in Fig. 12 gezeigten konventionellen Spant-Stringer-Bauweise, die deutlich längliche rechteckige Hautfelder ergibt, nur recht schwer erreichen; bei Versteifungsgitterstrukturen mit dreieckigen, sechseckigen oder im Wesentlichen quadratischen Hautfeldern sind dagegen die Beulformen sehr gut vorhersagbar. Derartige Versteifungsgitterstrukturen sind daher bevorzugt.

Versteifungsgitterstrukturen - im Folgenden auch Grid-Strukturen genannt - mit dreieckigen und/oder sechseckigen und/oder quadratischen Hautfeldern verhalten sich strukturmechanisch hinsichtlich Beulen signifikant anders als länglich rechteckversteifte Strukturen wie die Spant-Stringer-Bauweise. Bei länglich rechteckversteiften Strukturen kann die Beulform, also die Zahl der auftretenden BeulHalbwellen, oft nur schwer oder gar nicht vorhergesagt werden. Bei Grid-Strukturen sind diese jedoch mit hoher Verlässlichkeit vorhersagbar. Letztere hängen im Wesentlichen nur von der Form bzw. Geometrie und der Lastrichtung ab.

Gleichzeitig kann die Beulform durch geeignete Formgebung der Versteifungsprofile stark beeinflusst werden.

Weiter sind derartige Grid-Struktkuren mit dreieckversteiften, sechseckversteiften oder quadratisch versteiften Hautfeldern wesentlich weniger sensibel gegenüber geometrischen Imperfektionen in der Schale. Eine sozusagen fertigungstechnisch verursachte "Vorbeulung" der Schale oder des Hautfelds mit einer gewissen maximalen Amplitude - angegeben in Prozent der Hautdicke oder Schalendicke - führt insbesondere bei Grid-Strukturen zu einer signifikant geringeren Absenkung des initialen Beulens der Hautfelder als bei Spant-Stringer-Strukturen. Berechnungen haben ergeben, dass die gesamte Struktur des Flächenbauteils im Nachbeulbereich zum einen von solchen Imperfektionen eher profitiert als die Tragfähigkeit reduziert. Das auf das initiale Beulen der Haut folgende Beulen der Versteifungsprofile tritt mit steigender Imperfektion später auf. Auch das vollständige Kollabieren der Struktur bei noch höherer Last ist nur gering beeinflusst.

Bei einer bevorzugten Ausgestaltung der Erfindung ist aus diesen genannten Gründen hinsichtlich der Vorhersagbarkeit der Beulform und der geringeren Sensibilität gegenüber Imperfektionen heraus bevorzugt, dass in eine Grid-Struktur mit vorhersagbarer Beulform gezielt Imperfektionen geringerer Amplitude in der zur gewünschten Einflussnahme auf das Beulen geeigneten Form schon bei der Fertigung eingebracht werden. Zum Beispiel werden Imperfektionen mit ca. 10% der Haut- oder Schalendicke eingebracht. Dies würde zum Beispiel bei einer Schalen- oder Hautdicke von 2 mm etwa 0,2 mm Imperfektionen ergeben. Ein gewünschtes Beulverhalten kann alternativ auch durch den oben bereits erwähnten gezielten, ausgewählten, unsymmetrischen Materialaufbau der Schale erreicht werden. Dies geht bei Faserverbundbauweise zum Beispiel durch einen unsymmetrischen Aufbau von Faserverstärkungsschichten. Es können aber gezielt auch andere Versteifungsmaterialien hinzugefügt oder weggenommen werden.

Vorteilhafte Ausgestaltungen der Erfindung bieten somit einige besondere Vorteile:
- Es kann eine Bauweise in Faserverbund realisiert werden, die - wie früher die metallischen Strukturen - wieder "aktiv" den Nachbeulbereich ausnutzen kann, ohne insgesamt die dauerhafte Traglast zu reduzieren, und damit ein geringeres Gewicht erreicht.
- Die Vorbeulungsstruktur - beispielsweise erzielt durch Auslenkungen und/oder Imperfektionen - hat zur Folge, dass einerseits die dynamischen Effekte der schlagartigen Verformung bei lokalem Beulen entfallen und eine kontinuierliche Auslenkung der Schale bei steigender Last erfolgt. Andererseits scheint die Struktur des Flächenbauteils als Gesamtes durch ein später auftretendes Beulen der Versteifungsprofile bei bereits gebeulter Schale sogar höhere Lasten zu ertragen.
- Im Nachbeulbereich bei höheren Lasten verlieren gemäß Berechnungen die Imperfektionen oder sonstigen Vorbeulungsstrukturen an Einfluss. Die Steifigkeit nimmt zu und es werden wieder Lastniveaus wie bei der perfekten Struktur erreicht.
- Die Imperfektionen, für die auch geringe geometrische Ausmaße ausreichen, beeinflussen bei umströmten Strukturen wie zum Beispiel dem Rumpf eines Luftfahrzeuges den Luftwiderstand nicht signifikant.
- Durch das erfindungsgemäße Flächenbauteil oder eine seiner vorteilhaften Ausgestaltungen kann man wiederum eine Unterscheidung zwischen häufigen, aber geringen Lastamplituden und seltenen, aber hohen Lastamplituden erreichen; man kann die Auslegungsphilosophie für Stabilitätsversagen entsprechend verändern.

Vorzugsweise sind die Flächenbauteile derart ausgelegt, dass die Anbindung von Profilen der Versteifungsgitterstruktur an die Schale - die beispielsweise die Außenhaut bildet - und die Anbindung im Bereich von Kreuzungen der Profile, die durch die Imperfektionen provozierten Biegungen und Torsionen gezielt aufnehmen. Dies kann je nach Auslegung eine andere Anbindung oder eine Versteifung in diesem Bereich erfordern. Beispielsweise wird besonderes Augenmerk bei der Auslegung des Flächenbauteiles auf lokale Ermüdung, zum Beispiel von Klebeverbindungen an Profilausläufen - gelegt.

Die Flächenbauteile sollten vorzugsweise dort eingesetzt werden, wo sichergestellt ist, dass hohe Lasten - hohe Lastamplituden - signifikant seltener auftreten als geringe Lasten - geringe Lastamplituden. Bei Luftfahrzeugen sollten demnach harte Landungen, extreme Manöver usw. signifikant geringer auftreten als geringe Lasten. Im Bereich von Luftfahrzeugen sind insofern die hier beschriebenen Flächenbauteile eher geeignet für den Aufbau von Flächen größerer Verkehrsflugzeuge als für kleine, für den Kunstflug ausgelegte Flugzeuge, um nur einige extreme Beispiele zu nennen.

Besonders bevorzugt ist die beschriebene gezielte Einbringung von Imperfektionen bei Grid-versteiften Strukturen mit - nach derzeitigem Kenntnisstand - dreieckigen und/oder sechseckigen und/oder im Wesentlichen quadratischen Hautfeldern vorgesehen. Mit anderen Worten ist die Einbringung von Imperfektionen für solche Hautfeldformen bevorzugt, in denen im Wesentlichen nur eine Beulhalbwelle entsteht. Besonders eignen sich gezielte fertigungstechnisch eingebrachte geometrische Imperfektionen (Vorbeulungsstrukturen) für derartige Strukturen mit eher sekundärem Charakter hinsichtlich Auftrieb und Widerstand der Strömung, also zum Beispiel für Rümpfe, Druckschotts, Zwischenböden oder Innenbauteile oder dergleichen. Für Tragflächen oder sonstige Außenflächen mit besonderem Gewicht auf Strömungsformen sind Vorbeulungsstrukturen bevorzugt, die eine glatte Außenhaut bieten. Dies kann insbesondere durch innere Maßnahmen, wie beispielsweise einen unsymmetrischen Laminataufbau in Faserverbundwerkstoffen erreicht werden.

Eine Besonderheit der Vorbeulungsstruktur bei dem erfindungsgemäßen Flächenbauteil ist, dass durch derartige Vorbeulungsstrukturen zwar die Stabilität der Schale gezielt geschwächt wird. Die Struktur des Flächenbauteils wird somit durch die Vorbeulungsstruktur zunächst gezielt geschwächt, um anschließend jedoch deutlich höhere Lasten ausnutzen zu können.

Dies ist bisher ohne Vorbild. Zwar gibt es im Bereich des Metallbaus oder auch für Rohre oder Flaschen die allgemein bekannte Lehre, durch gezielte Auslenkungen - wie Sicken oder Nuten oder Einbringung von hexagonalen Strukturen - die Schale insgesamt zu versteifen. Derartige Verfahren zur Versteifung von Schalen durch eingebrachte Auslenkungen haben aber genau das gegenteilige Ziel wie die hier beschriebene Lehre; bei den bekannten Aussteifungen durch Sicken, Nuten, Umfaltungen, Einpressungen oder dergleichen wird durch eine Umformung eine unversteifte Struktur ausgesteift. Bei dem hier beschriebenen Flächenbauteil wird jedoch die Steifigkeit einer bereits versteiften Struktur reduziert, um das Stabilitätsverhalten nach eigenen Wünschen zu beeinflussen.

Ausführungsbeispiele der Erfindung werden nachfolgend anhand der beigefügten Zeichnungen näher erläutert. Darin zeigt:
- Fig. 1: eine schematische Darstellung eines Teils eines Rumpfs eines Luftfahrzeuges, der aus Flächenbauteilen gebildet ist, welche eine Schale und eine Versteifungsgitterstruktur aufweisen;
- Fig. 2: ein Flächenbauteil in Form eines Ausschnittes des Rumpfes von Fig. 1 in unbelastetem Zustand als perfekte Struktur zur Darstellung eines zu lösenden Problems;
- Fig. 3: einen Schnitt durch ein Hautfeld des Flächenbauteils von Fig. 2 mit einer Andeutung eines Beulverhaltens unter Last;
- Fig. 4: einen Teilbereich des Flächenbauteils von Fig. 2 sowie eines Flächenbauteils gemäß der Erfindung unter Last;
- Fig. 5: ein Kraft-Weg-Diagramm einer gekrümmten, dreieckversteiften Flächenbauteil-Struktur unter axialer Kompression (beispielsweise der Struktur von Fig. 2), wobei eine perfekte Struktur mit unterschiedlichen Ausführungsformen von Vorbeulungsstrukturen verglichen wird;
- Fig. 6: eine perspektivische Darstellung eines Hautfeldes des Flächenbauteils der Fig. 2 und 4 mit einer Vorbeulungsstruktur gemäß einer ersten Ausführungsform;
- Fig. 7: eine Draufsicht auf das Hautfeld von Fig. 6;
- Fig. 8: eine perspektivische Darstellung des Hautfeldes mit einer weiteren Ausführungsform der Vorbeulungsstruktur;
- Fig. 9: eine Draufsicht auf das Hautfeld von Fig. 8;
- Fig. 10: ein Ausführungsbeispiel für ein Flächenbauteil gemäß der Erfindung mit Vorbeulungsstrukturen;
- Fig. 11: einen Schnitt durch ein Hautfeld eines Flächenbauteils mit einer Vorbeulungsstruktur gemäß einer weiteren Ausführungsform;
- Fig. 12: eine Draufsicht auf ein Flächenbauteil in üblicher Spant-Stringer-Bauweise; und
- Fig. 13 bis 17: unterschiedliche Ausführungsformen von Flächenbauteilen mit besonders geeigneten Versteifungsgitterstrukturen; und
- Fig. 18: eine schematische Darstellung eines Luftfahrzeuges, bei dem Primärstrukturen mit erfindungsgemäßen Flächenbauteilen aufgebaut sind.

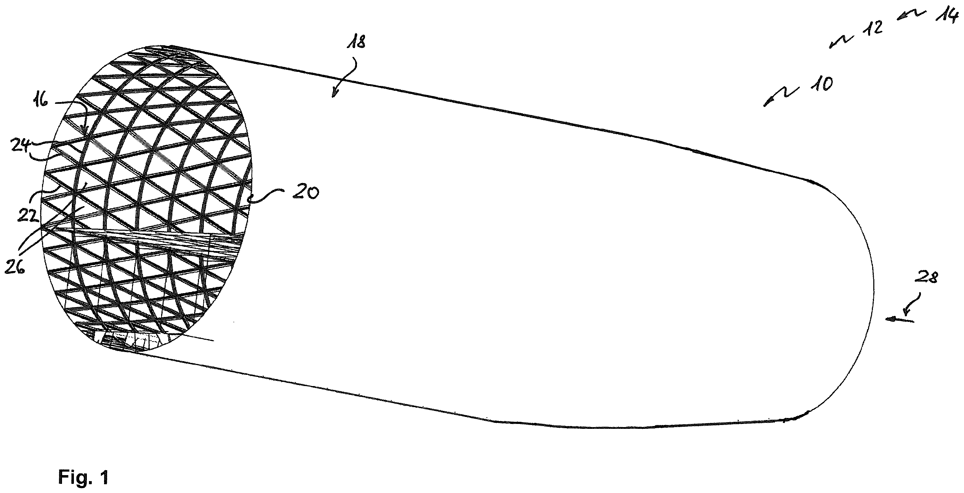

In Fig. 1 ist ein aus mehreren Sektionen gebildeter Teil eines Rumpfes 10 eines Flugzeuges 12 als Beispiel für ein Luftfahrzeug 14 dargestellt. Der Rumpf 10 ist im Wesentlichen zylinderförmig und aus Flächenbauteilen 16 gebildet, die eine die Außenhaut 18 des Rumpfes 10 bildende Schale 20 und eine innere Versteifungsgitterstruktur 22 aufweisen.

Die Versteifungsgitterstruktur 22 ist aus Profilen 24 gebildet, die in gleichmäßiger dreieckförmiger Struktur angeordnet sind, so dass zwischen den Profilen 24 dreieckförmige Hautfelder 26 der Schale 20 ausgebildet sind. Für nähere Einzelheiten zum grundsätzlichen Aufbau des Flächenbauteils 16 und der Versteifungsgitterstruktur 22 sowie möglichen Verbindungen zwischen den Profilen 24 und der Schale 20 wird auf die DE 10 2009 056 995 A1, die DE 10 2009 056 996 A1, die DE 10 2009 056 997 A1 und die DE 10 2009 057 018 A1 verwiesen.

Weiter wird für nähere Einzelheiten zur Herstellung derartiger Flächenbauteile auf die DE 10 2009 057 006 A1 und die DE 10 2009 057 009 A1 verwiesen.

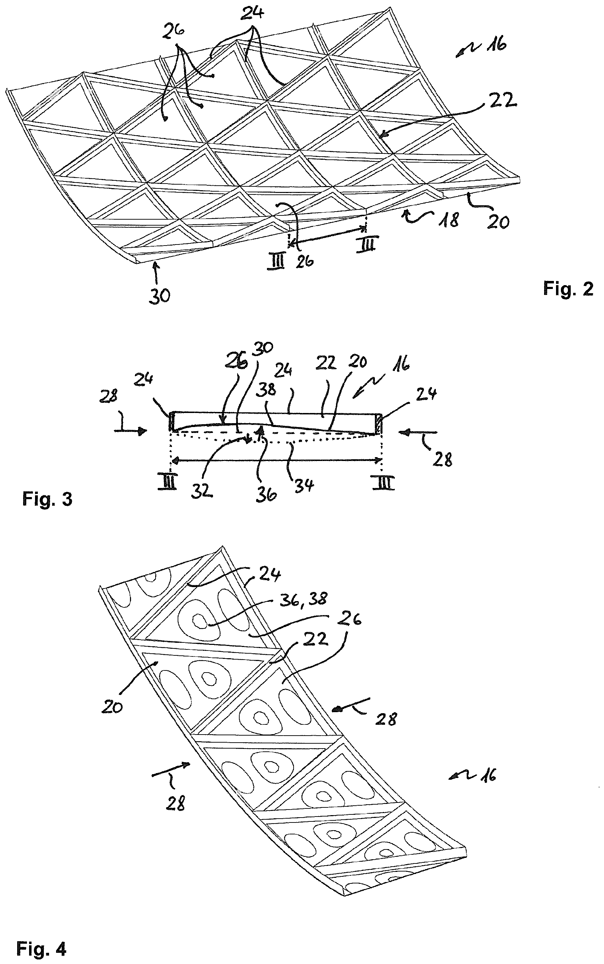

Ein Flächenbauteil 16 des Rumpfes 10 ist in Fig. 2 schematisch dargestellt. Wie daraus entnehmbar, ist die Schale 20 auf einer Seite, nämlich hier der Innenseite mit der Versteifungsgitterstruktur 22 versteift, wobei hier als Beispiel die Profile 24 der Versteifungsgitterstruktur 22 dreieckförmig angeordnet sind, so dass die Schale 20 in den Bereichen zwischen den Profilen 24 in dreieckförmige Hautfelder 26 unterteilt ist.

Im typischen Betrieb des Luftfahrzeuges 14 ist das Flächenbauteil 16 vielen kleineren dynamischen Belastungen mit geringerer Amplitude und nur sehr wenigen höheren Belastungen mit größerer Amplitude unterworfen.

Bei den bisher bekannten Versteifungsgitterstrukturen 22, siehe die oben genannten Druckschriften, ist dann, wenn die Schale 20 und/oder das gesamte Flächenbauteil 16 aus Faserverbundwerkstoffen aufgebaut ist, die Struktur des Flächenbauteils 16 derart ausgelegt, dass die im Betrieb auftretenden möglichen Belastungen nicht zu einer Verbeulung der Schale 20 führen.

Wie Fig. 2 zeigt, ist dabei die Schale 20 - bis auf die Krümmung der Außenhaut 18 des Rumpfes 10 - glatt und ebenmäßig ausgebildet und bildet somit eine "perfekte Struktur", die so ausgelegt ist, dass die auftretenden Belastungen ohne Verbeulen der Schale 20 und/oder des Flächenbauteils 16 aufgenommen werden können.

In Fig. 3 ist in übetriebener Darstellung angedeutet, was bei einer derartigen Struktur unter zunehmender axialer Belastung (axial bezüglich der Achse des Rumpfes 10, also in Richtung parallel zu der Hauptfläche der Schale 20) geschieht.

In Fig. 3 ist ein Hautfeld 26 des Flächenbauteils 16 entsprechend des Schnittes III-III von Fig. 2 unter zunehmender axialer Last 28 dargestellt. Die gestrichelte Linie zeigt die perfekte Schale 30 ohne Belastung. Bei bisherigen Strukturen von Flächenbauteilen 16 sind diese Strukturen derart ausgelegt, dass bei typischen Belastungen bis hin zur Grenzlast die perfekte Schale 30 diese mit den gestrichelten Linien in Fig. 3 dargestellte Lage etwa beibehält oder in dem Hautfeld 26 zunächst gemäß dem Pfeil 32 etwas nach außen ausbeult; der Pfeil 32 stellt somit eine (geringe) Beulung nach außen dar. Diese Beulung 32 nach außen ist auch durch die gepunktete Linie 34 angedeutet. Wird die Last 28 weiter erhöht, dann schlägt die Schale des Hautfelds 26 von der bei 34 gezeigten Form nach innen aus und wird dann zunehmend nach innen gebeult, wie dies durch die durchgezogene Linie 36 angedeutet ist.

Fig. 4 zeigt einen Teil des unter axialer Last 28 stehenden Flächenbauteils 16 von Fig. 2 mit entsprechend nach innen gebeulten Hautfeldern 26.

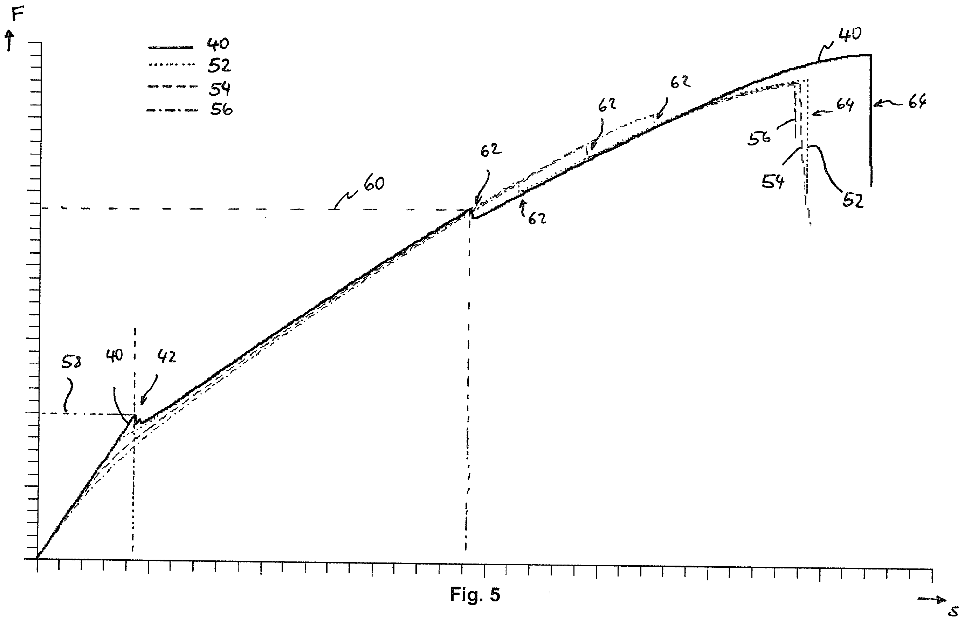

Fig. 5 zeigt ein Kraft-Weg-Diagramm für das in Fig. 4 dargestellte Flächenbauteil 16 unter zunehmender axialer Last, wobei auf der y-Achse die Kraft F und auf der x-Achse der Weg s der Verformung des Flächenbauteils 16 in axialer Richtung dargestellt ist. Genauer bezeichnet F die Last in axialer Richtung an der Einleitstelle und s die Verschiebung der Einleitstelle in axialer Richtung unter Einfluss dieser Last.

Die durchgezogene Linie zeigt dabei die perfekte Struktur, wie sie in Fig. 2 angedeutet ist, wobei die Schale 20 - perfekte Schale 30 - entsprechend glattflächig und ebenmäßig ausgebildet ist. Diese Kraft-Weg-Kurve 40 der perfekten Struktur zeigt bei 42 einen abrupten Abfall, der den plötzlichen Umschwung 42 von der in Fig. 3 dargestellten, unverformten Schale 30 oder der leicht nach außen gebeulten Schale 34 zu der Beulung 36 hin nach innen anzeigt.

Während bei einer Auslegung des Flächenbauteils 16 in metallischen Werkstoffen derartige Beulungen 32, 36 zwar zu Materialermüdungen führen, ansonsten aber für Metalle unkritisch sind, ist bei Faserverbundstrukturen ein solcher Umschwung kritischer zu sehen und möglichst zu vermeiden. Aus diesem Grunde werden - wie oben bereits erläutert - bisherige in Faserverbundwerkstoffen ausgeführte Flächenbauteile 16 so ausgelegt, dass die Belastungen bis hin zur Grenzlast 58 nicht zu entsprechendem Nachbeulen führen.

Der bei 62 angedeutete Sprung gibt den Beginn des Beulens von Teilen der Versteifungsgitterstruktur an, und am rechten Ende zeigt der deutliche Abfall der Kurve den Kollaps 64 der Struktur.

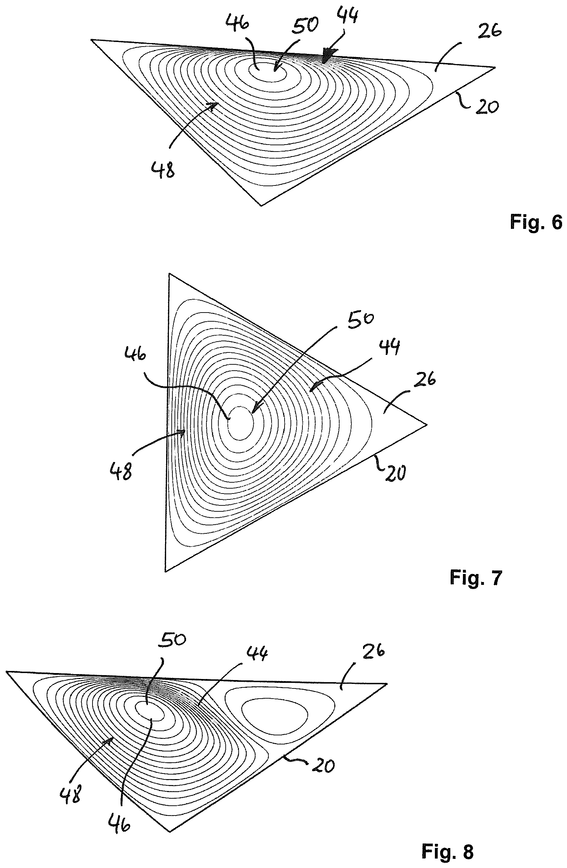

Die Fig. 6 und 7 zeigen dagegen das Hautfeld 26 für die Struktur des Flächenbauteils 16 gemäß den Fig. 2 und 4, wobei das Hautfeld 26 mit einer Vorbeulungsstruktur 44 versehen ist, die bewirkt, dass die Schale 20 an dem Hautfeld 26 sich unter einer axialen Last 28 in einer vorbestimmten Richtung beult.

Bei dem Ausführungsbeispiel der Fig. 6 und 7 weist die Vorbeulungsstruktur 44 eine Auslenkung 46 der Schale 20 nach innen hin zu der Versteifungsgitterstruktur 22 auf. Die Schale 20 ist somit nicht mehr die Schale 30 einer perfekten Struktur, die gleichmäßig und eben ist, vielmehr weist die Schale 20 an den Hautfeldern 26 Imperfektionen 48 in Form der Auslenkung 46 oder mit anderen Worten in Form einer Vorbeulung 50 in der gewünschten Richtung auf. Die Schale 20 des Hautfeldes 26 ist somit bereits im unbelasteten Zustand in einem bestimmten Ausmaß in Richtung des Pfeiles 36 von Fig. 3 nach innen ausgebeult.

Bei der Auslegung der Schale 20 kann man hierzu für das Maß der Beulung 36 nach innen einige Prozent der Dicke der Schale 20 annehmen. Die nach innen gebeulte Schale 38 von Fig. 3 würde somit eine stark übertriebene Darstellung der Vorbeulung 50 zeigen, in der Praxis ist die Auslenkung geringer zu wählen.

Die gepunktete Linie in Fig. 5 zeigt zum Beispiel die Kraft-Weg-Kurve 52 für ein Flächenbauteil 16 mit Imperfektionen 48 in einem Ausmaß von 5% der Dicke der Schale 20. Die gestrichelte Linie zeigt eine Kraft-Weg-Kurve 54 mit Imperfektionen von 20% der Schalendicke; und die strichpunktierte Linie zeigt eine Kraft-Weg-Kurve 56 mit Imperfektionen von 50% der Schalendicke.

Ein Vergleich der Kurven 40, 52, 54, 56 zeigt, dass die perfekte Struktur mit der perfekten Schale 30 nur bis zu einer Grenzlast 58 zu betreiben ist, wo der plötzliche Umschwung 42 erfolgt und wo die Schale 20 beginnt, sich nach innen zu beulen.

Ein weiterer Sprung 62 in der Kurve 40 zeigt die maximale ultimative Last 60 an, mit der die perfekte Struktur belastet werden kann. Der Sprung 62 gibt den Moment an, bei dem sich die Versteifungsgitterstruktur 22 zu beulen (verbiegen) beginnt und wo ein Modenwechsel bei der Schale 20, 30 auftritt. Der plötzliche Abfall am Ende der Kurven zeigt den Kollaps 64 der Struktur des Flächenbauteils 16 an. Hier verbeult sich das gesamte durch das Flächenbauteil 16 gebildete Paneel.

Ein Vergleich der Kraft-Weg-Kurve 40 der perfekten Struktur einerseits und der Kraft-Weg-Kurven 52, 54, 56 mit Imperfektionen 48 in der Schale 20 zeigt, dass die Flächenbauteile 16 mit den Vorbeulungsstrukturen 44 auch in einem Bereich betrieben werden können, der nach der Grenzlast 58 für die perfekte Struktur liegt. Insbesondere die Kurven 54, 56 mit Imperfektionen in der Größenordnung von 20% oder 50% der Schalendicke zeigen in weiten Bereichen flach gebogene Kurven ohne Sprünge.

Demnach können die Flächenbauteile 16 mit den Vorbeulungsstrukturen 44 selbst bei Verwendung von Faserverbundwerkstoffen für die Schale 20 auch im Nachbeulbereich betrieben werden. Bei gleichem Gewicht können höhere Lasten aufgenommen werden. Oder es können die gleichen Lasten mit einer Struktur mit geringerem Gewicht aufgenommen werden.

Dies ist insbesondere bei der Auslegung in Faserverbundwerkstoffen interessant; kann aber auch bei Flächenbauteilen aus anderen Materialien Vorteile bieten.

Unter Last nehmen die Flächenbauteile 16 mit erfindungsgemäßer Ausführung auch die in Fig. 4 gezeigte Form an; dies lässt sich ohne Umschwünge 42 in gut vorhersagbarer Weise erreichen.

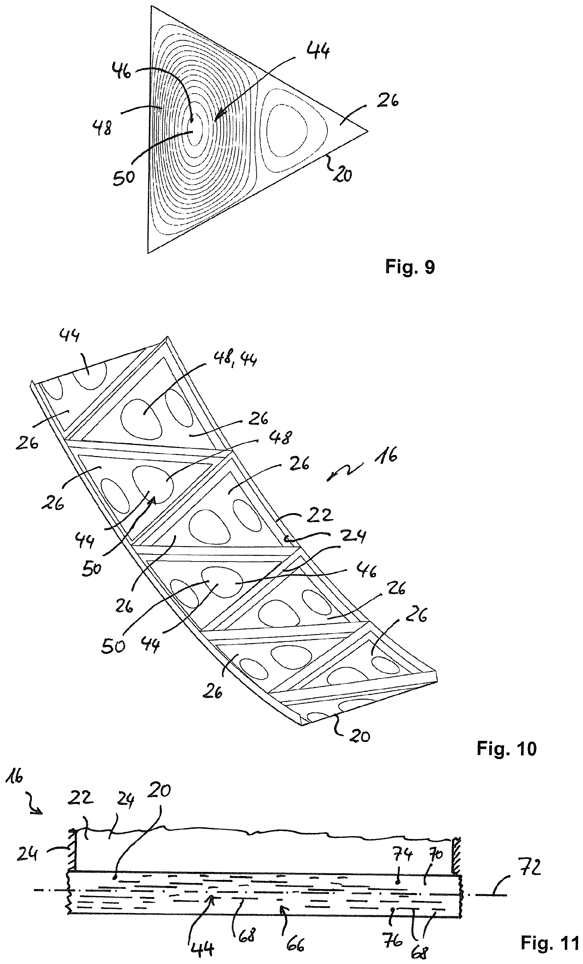

Die Fig. 8 und 9 zeigen die Hautfelder 26 mit anderen Ausführungsformen der Vorbeulungsstrukturen 44, wobei die Form der Vorbeulung 50 anders gewählt ist.

Fig. 10 zeigt ein Flächenbauteil 16 mit der Schale 20 und der Versteifungsgitterstruktur 22, wobei die Hautfelder 26 zwischen den Profilen 24 mit den Vorbeulungsstrukturen 44 gemäß den Fig. 8 und 9 versehen sind. Fig. 10 zeigt den unbelasteten und Fig. 4 den belasteten Zustand dieses Flächenbauteils 16.

Anstelle der Imperfektionen 58 kann die Vorbeulungsstruktur 44 aber auch auf andere Weise ausgebildet werden. Wesentlich für die Vorbeulungsstruktur 44 ist ein gewünschtes Auslenkverhalten unter Last. Dies kann durch unterschiedliche Maßnahmen in der Struktur und dem Aufbau der Schale 20 erreicht werden.

Fig. 11 zeigt in einem Schnitt durch ein Hautfeld 26 den inneren Aufbau der Schale 20 in Faserverbundwerkstoffen 66 mit mehreren Lagen von Fasern 68, die in einer Kunststoffmatrix 70 eingebettet sind. Die Faserlagen 68 sind bezüglich der Mittelfläche 72 der Schale 20 unsymmetrisch aufgebaut, so dass sich das Hautfeld 26 unter Last in eine Richtung, nämlich vorzugsweise nach innen, verbeult. Hierzu sind z.B. in einem Bereich (z.B. zentraler Bereich) des Hautfelds 26 mehr Fasern 68 in der ersten Hälfte 74 der durch die Mittelfläche 72 gedacht geteilten Schale 20 und weniger Fasern 68 in der zweiten Hälfte 76 vorgesehen, während in einem anderen Bereich (zum Beispiel weiter außen) weniger Fasern 68 in der ersten Hälfte 74 und mehr Fasern 68 in der zweiten Hälfte 76 der Schale 20 vorgesehen sind.

Die gezeigte Maßnahme, die Schale 20 mit Vorbeulungsstrukturen 44 zu versehen, hat insbesondere dort Vorteile, wo ein Ausbeulen der Schale 20 unter Last definiert vorhergesagt oder berechnet werden kann.

Fig. 12 zeigt eine übliche Spant-Stringer-Bauweise eines bekannten Flächenbauteils, wobei eine Versteifungsstruktur 82 durch Spante 84 und Stringer 86 gebildet ist, so dass längliche rechteckige Hautfelder 88 entstehen.

Bei langgestreckten Hautfeldern 88 kann sich unter Last nicht nur eine (Haupt-) Beulhalbwelle, wie zum Beispiel in Fig. 6 oder Fig. 3 angedeutet ausbilden, sondern mehrere Beulhalbwellen in unterschiedliche Richtungen.

Dagegen zeigen die Fig. 13 bis 17 Versteifungsgitterstrukturen 22 mit Hautfeldern 26, bei denen sich im Wesentlichen nur eine Beulungshalbwelle ausbildet.

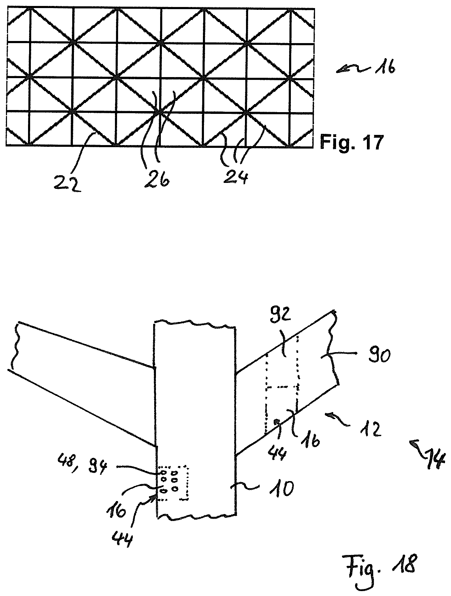

Fig. 13 zeigt dabei eine Versteifungsgitterstruktur 22 mit im Wesentlichen quadratischem Hautfeld 26; Fig. 14 zeigt die bereits angedeutete dreieckförmige Form der Versteifungsgitterstruktur 22 mit dem dreieckförmigen Hautfeld 26; Fig. 15 zeigt eine Kombination aus quadratischen und dreieckförmigen Hautfeldern 26; Fig. 16 zeigt eine Kombination aus dreieckigen und sechseckigen Hautfeldern 26 und Fig. 17 zeigt eine Versteifungsgitterstruktur 22 mit einer weiteren Form von dreieckförmigen Hautfeldern 26.

Für alle in den Fig. 13 bis 17 gezeigten Versteifungsgitterstrukturen 22 sind die Vorbeulungsstrukturen 44 besonders geeignet.

Sind die Vorbeulungsstrukturen 44 durch die Auslenkungen 46 der Schale 20 gebildet, so sind an der Außenhaut 18 einige konkave Bereiche 94 ausgebildet, wie in Fig. 18 angedeutet. Da die Auslenkungen 46 aber nur gering sind, hat dies keine oder nur sehr wenige Auswirkungen auf die aerodynamischen Eigenschaften des Rumpfes 10. Derartige Flächenbauteile 16 mit äußeren Imperfektionen 48 sind daher ohne Weiteres für Außenhautbereiche von Luftfahrzeugen 14 geeignet, die strömungsdynamisch unkritisch sind, wie beispielsweise die Rümpfe 10.

Die Flächenbauteile 16 mit Vorbeulungsstrukturen 44 können aber auch im Bereich von strömungsmechanisch wirksamen Außenhautflächen eines Luftfahrzeuges, wie beispielsweise einer Tragfläche 90 - in Fig. 18 angedeutet - verwendet werden. Hierzu kommen vorzugsweise Vorbeulungsstrukturen 44 in Betracht, die durch innere Materialmaßnahmen, wie beispielsweise die in Fig. 11 angedeutete unsymmetrische Verteilung von Fasern 68, verwirklicht sind, um Tragflächensektionen 92 zu bilden.

Bei der Herstellung der Flächenbauteile 16 werden die Vorbeulungsstrukturen 44 bereits bei der Fertigung der Schale 20 mit eingebracht. Ansonsten wird bei der Herstellung wie in den oben genannten Dokumenten DE 10 2009 013 511 A1, DE 10 2009 013 585 A1, DE 10 2009 048 748 A1, DE 10 2009 056 994 A1, DE 10 2009 056 995 A1, DE 10 2009 056 996 A1, DE 10 2009 056 997 A1, DE 10 2009 056 998 A1, DE 10 2009 056 999 A1, DE 10 2009 057 006 A1, DE 10 2009 057 009 A1, DE 10 2009 057 010 A1 und/oder DE 10 2009 057 018 A1 vorgegangen. Eventuell werden dabei Verbindungspunkte zwischen Profilen 24 untereinander und/oder zwischen Profilen 24 und Schale 20 verstärkt.

Durch Auswahl geeigneter Profilformen für die Profile 24 und insbesondere die Form der Versteifungsgitterstrukturen 22 kann das Beulverhalten noch weiter beeinflusst werden.

### Bezugszeichenliste:

- 10: Rumpf
- 12: Flugzeug
- 14: Luftfahrzeug
- 16: Flächenbauteil
- 18: Außenhaut
- 20: Schale
- 22: Versteifungsgitterstruktur
- 24: Profil
- 26: Hautfeld
- 28: axiale Last
- 30: perfekte Schale
- 32: Beulung nach außen
- 34: nach außen gebeulte Schale
- 36: Beulung nach innen
- 38: nach innen gebeulte Schale
- 40: Kraft-Weg-Kurve der perfekten Struktur
- 42: plötzlicher Umschwung
- 44: Vorbeulungsstruktur
- 46: Auslenkung
- 48: Imperfektionen
- 50: Vorbeulung
- 52: Kraft-Weg-Kurve mit Imperfektionen von 5% der Schalendicke
- 54: Kraft-Weg-Kurve mit Imperfektionen von 20% der Schalendicke
- 56: Kraft-Weg-Kurve mit Imperfektionen von 50% der Schalendicke
- 58: Grenzlast
- 60: Ultimative Last
- 62: Sprung
- 64: Kollaps
- 66: Faserverbundwerkstoff
- 68: Fasern
- 70: Kunststoffmatrix
- 72: Mittelfläche
- 74: erste Hälfte
- 76: zweite Hälfte
- 80: bekanntes Flächenbauteil
- 82: Versteifungsstruktur
- 84: Spant
- 86: Stringer
- 88: langgestrecktes Hautfeld
- 90: Tragfläche
- 92: Tragflächensektion
- 94: konkave Bereiche
- F: Kraft - hier: axiale Kompressionslast an der Einleitstelle
- s: Weg - hier: Verlagerung der Einleitstelle der Last in axialer Richtung

## Patentansprüche

1. Flächenbauteil (16) für ein Luftfahrzeug (14), mit wenigstens einer Schale (20) und einer Versteifungsgitterstruktur (22),
**dadurch gekennzeichnet,**
**dass** die Schale (20) eine durch Ausbilden der Schale (20) bei der Fertigung mit wenigstens einer Auslenkung (46) oder einer Anordnung von Auslenkungen (46) der Schale (20) zu einer Richtung hin gebildete Vorbeulungsstruktur (44) hat, die unter einer in Richtung parallel zur Schale auf die Schale (20) wirkenden Belastung eine Verbeulung der Schale (20) in einer vorbestimmten Richtung bewirkt.

2. Flächenbauteil nach Anspruch 1,
**dadurch gekennzeichnet,**
**dass** die Schale (20) aus Faserverbundmaterial (66) gebildet ist.

3. Flächenbauteil (16) für ein Luftfahrzeug (14), mit wenigstens einer Schale (20) und einer Versteifungsgitterstruktur (22), wobei die Schale (20) aus Faserverbundmaterial (66) gebildet ist,
**dadurch gekennzeichnet,**
**dass** die Schale (20) eine Vorbeulungsstruktur (44) hat, die unter einer in Richtung parallel zur Schale auf die Schale (20) wirkenden Belastung eine Verbeulung der Schale (20) in einer vorbestimmten Richtung dadurch bewirkt, dass das Faserverbundmaterial (66) bezüglich einer Mittelfläche (72) der Schale (20) unsymmetrisch aufgebaut ist.

4. Flächenbauteil nach einem der voranstehenden Ansprüche,
**dadurch gekennzeichnet,**
**dass** die Schale (20) eine Anordnung von Auslenkungsbereichen hat, wo die Schale (20) zu einer Querrichtung hin ausgelenkt ist.

5. Flächenbauteil nach einem der voranstehenden Ansprüche,
**dadurch gekennzeichnet,**
**dass** die Versteifungsgitterstruktur (22) auf einer Seite der Schale (20) angeordnet ist und dass die Vorbeulungsstruktur (44) derart ausgebildet ist, dass sich die Schale (20) unter Belastung zuerst zu der Versteifungsgitterstruktur (22) in einen Bereich zwischen Versteifungsprofilen hinein verbeult.

6. Flächenbauteil nach einem der voranstehenden Ansprüche,
**dadurch gekennzeichnet,**
**dass** die Versteifungsgitterstruktur (22) derart ausgebildet ist, dass sich die Schale (20) an durch die Versteifungsgitterstruktur (22) jeweils umrahmten Hautfeldern (26) unter Belastung im Wesentlichen nur mit einer Beulhalbwelle ausbeult.

7. Flächenbauteil nach Anspruch 6,
**dadurch gekennzeichnet,**
**dass** die Hautfelder (26) dreieckig und/oder sechseckig und/oder quadratisch ausgebildet sind.

8. Rumpf- und/oder Tragflächensektion für ein Luftfahrzeug (14), zumindest teilweise gebildet aus oder mit wenigstens einem oder mehreren Flächenbauteil(en) (16) nach einem der voranstehenden Ansprüche.

9. Verfahren zum Herstellen eines Flächenbauteils (16) für ein Luftfahrzeug (14), mit
a) Herstellen einer Schale (20) und
b) Herstellen einer Versteifungsstruktur zum Versteifen der Schale (20),
**dadurch gekennzeichnet, dass** Schritt a) den Schritt umfasst:
a1) Ausbilden der Schale (20) mit einer Vorbeulungsstruktur (44) derart, dass sich die Schale (20) unter einer in Richtung der Schalebene wirkenden Last in eine vorbestimmte Richtung ausbeult durch Ausbilden der Schale (20) bei der Fertigung mit wenigstens einer Auslenkung (46) oder einer Anordnung von Auslenkungen (46) der Schale (20) zu einer Richtung hin, um so die Vorbeulstruktur (44) zu bilden.

10. Verfahren nach Anspruch 9,
**dadurch gekennzeichnet,**
**dass** der Schritt a) umfasst:
Herstellen der Schale (20) in Faserverbundbauweise.

11. Verfahren zum Herstellen eines Flächenbauteils (16) für ein Luftfahrzeug (14), mit
a) Herstellen einer Schale (20) in Faserverbundbauweise und
b) Herstellen einer Versteifungsstruktur zum Versteifen der Schale (20),
**dadurch gekennzeichnet, dass** Schritt a) den Schritt umfasst:
a1) Ausbilden der Schale (20) mit einer Vorbeulungsstruktur (44) derart, dass sich die Schale (20) unter einer in Richtung der Schalebene wirkenden Last in eine vorbestimmte Richtung ausbeult durch unsymmetrisches Anordnen von Faserstrukturen, um eine Schalhälfte steifer als die andere Schalhälfte auszubilden und so die Vorbeulungsstruktur (44) zu bilden.

## Claims

1. Surface component (16) for an aircraft (14), having at least one shell (20) and a reinforcement grid structure (22),
**characterized**
**in that** the shell (20) has a preliminary buckling structure (44) which is formed by constructing the shell (20) during production with at least one redirection (46) or an arrangement of redirections (46) of the shell (20) in a direction, and which, under a load which acts on the shell (20) in a direction parallel with the shell, brings about a buckling of the shell (20) in a predetermined direction.

2. Surface component according to Claim 1,
**characterized**
**in that** the shell (20) is formed from composite fiber material (66).

3. Surface component (16) for an aircraft (14), having at least one shell (20) and a reinforcement grid structure (22), wherein the shell (20) is formed from composite fiber material (66),
**characterized**
**in that** the shell (20) has a preliminary buckling structure (44) which, under a load which acts on the shell (20) in a direction parallel with the shell, brings about a buckling of the shell (20) in a predetermined direction since the composite fiber material (66) is constructed in an asymmetrical manner with respect to a central face (72) of the shell (20).

4. Surface component according to one of the preceding claims,
**characterized**
**in that** the shell (20) has an arrangement of redirection regions, in which the shell (20) is redirected toward a transverse direction.

5. Surface component according to one of the preceding claims,
**characterized**
**in that** the reinforcement grid structure (22) is arranged at one side of the shell (20) and in that the preliminary buckling structure (44) is constructed in such a manner that the shell (20) buckles under load at first in a direction toward the reinforcement grid structure (22) into a region between reinforcement profile-members.

6. Surface component according to one of the preceding claims,
**characterized**
**in that** the reinforcement grid structure (22) is constructed in such a manner that the shell (20) buckles at skin fields (26) which are each surrounded by the reinforcement grid structure (22) under load substantially only with a buckling half-wave.

7. Surface component according to Claim 6,
**characterized**
**in that** the skin fields (26) are constructed in a triangular and/or hexagonal and/or square manner.

8. Fuselage section and/or supporting surface section for an aircraft (14), which section is at least partially formed from or with at least one or more surface component(s) (16) according to one of the preceding claims.

9. Method for producing a surface component (16) for an aircraft (14), having
a) production of a shell (20) and
b) production of a reinforcement structure for reinforcing the shell (20),
**characterized in that** step a) comprises the step of:
a1) forming the shell (20) with a preliminary buckling structure (44) in such a manner that the shell (20) buckles in a predetermined direction under a load acting in the direction of the shell plane by constructing the shell (20) during production with at least one redirection (46) or an arrangement of redirections (46) of the shell (20) in a direction in order to thus form the preliminary buckling structure (44) .

10. Method according to Claim 9,
**characterized**
**in that** the step a) comprises:
producing the shell (20) with a composite fiber construction method.

11. Method for producing a surface component (16) for an aircraft (14), having
a) production of a shell (20) with a composite fiber construction method and
b) production of a reinforcement structure for reinforcing the shell (20),
**characterized in that** step a) comprises the step of:
a1) forming the shell (20) with a preliminary buckling structure (44) in such a manner that the shell (20) buckles in a predetermined direction under a load acting in the direction of the shell plane by asymmetrical arrangement of fiber structures in order to construct one shell half in a more rigid manner than the other shell half and thus to form the preliminary buckling structure (44).

## Revendications

1. Composant plat (16) pour un aéronef (14), comprenant au moins une coque (20) et une structure d'armature de renforcement (22),
**caractérisé en ce que**
la coque (20) présente une structure de déformation (44) formée par la réalisation de la coque (20) lors de la fabrication avec au moins une déviation (46) ou un système de déviations (46) de la coque (20) dans une direction, qui provoque, en cas de sollicitation agissant sur la coque (20) dans la direction parallèlement à la coque, une déformation de la coque (20) dans une direction prédéterminée.

2. Composant plat selon la revendication 1,
**caractérisé en ce que**
la coque (20) est formée d'un matériau composite renforcé par des fibres (66).

3. Composant plat (16) pour un aéronef (14), comprenant au moins une coque (20) et une structure d'armature de renforcement (22), la coque (20) étant formée d'un matériau composite renforcé par des fibres (66),
**caractérisé en ce que**
la coque (20) présente une structure de déformation (44) qui provoque, en cas de sollicitation agissant sur la coque (20) dans la direction parallèlement à la coque, une déformation de la coque (20) dans une direction prédéterminée, par le fait que le matériau composite renforcé par des fibres (66) présente une construction asymétrique par rapport à une surface médiane (72) de la coque (20).

4. Composant plat selon l'une quelconque des revendications précédentes,
**caractérisé en ce que**
la coque (20) présente un système de zones de déviation dans lesquelles la coque (20) est déviée dans une direction transversale.

5. Composant plat selon l'une quelconque des revendications précédentes,
**caractérisé en ce que**
la structure d'armature de renforcement (22) est disposée d'un côté de la coque (20) et **en ce que** la structure de déformation (44) est réalisée de telle sorte que la coque (20) se déforme en cas de sollicitation tout d'abord vers la structure d'armature de renforcement (22) dans une zone entre des profils de renforcement.

6. Composant plat selon l'une quelconque des revendications précédentes,
**caractérisé en ce que**
la structure d'armature de renforcement (22) est réalisée de telle sorte que la coque (20) se déforme en cas de sollicitation essentiellement seulement avec une demi-onde de déformation au niveau de sections de peau (26) encadrées à chaque fois par la structure d'armature de renforcement (22) .

7. Composant plat selon la revendication 6,
**caractérisé en ce que**
les sections de peau (26) sont réalisées sous forme triangulaire et/ou hexagonale et/ou quadratique.

8. Section de fuselage et/ou de surface portante pour un aéronef (14), formée au moins en partie ou comprenant au moins un ou plusieurs composants plats (16) selon l'une quelconque des revendications précédentes.

9. Procédé de fabrication d'un composant plat (16) pour un aéronef (14), comprenant
a) la fabrication d'une coque (20) et
b) la fabrication d'une structure de renforcement pour le renforcement de la coque (20),
**caractérisé en ce que** l'étape a) comprend l'étape suivante :
a1) réalisation de la coque (20) avec une structure de déformation (44) de telle sorte que la coque (20) se déforme dans une direction prédéterminée sous une charge agissant dans la direction du plan de la coque, par réalisation de la coque (20) lors de la fabrication avec au moins une déviation (46) ou un système de déviations (46) de la coque (20) dans une direction afin de former ainsi la structure de déformation (44).

10. Procédé selon la revendication 9, **caractérisé en ce que**
l'étape a) comprend :
la fabrication de la coque (20) par une construction composite renforcée par des fibres.

11. Procédé de fabrication d'un composant plat (16) pour un aéronef (14), comprenant
a) la fabrication d'une coque (20) par une construction composite renforcée par des fibres et
b) la fabrication d'une structure de renforcement pour renforcer la coque (20),
**caractérisé en ce que** l'étape a) comprend l'étape
a1) réalisation de la coque (20) avec une structure de déformation (44) de telle sorte que la coque (20) se déforme dans une direction prédéterminée sous une charge agissant dans la direction du plan de la coque par un agencement asymétrique de structures fibreuses afin de réaliser une moitié de coque plus rigide que l'autre moitié de coque et de former ainsi la structure de déformation (44).
